# EUROPÄISCHE PATENTSCHRIFT

(11) **EP 1 091 794 B1**
(45) Veröffentlichungstag und Bekanntmachung des Hinweises auf die Patenterteilung: **09.04.2003**
(21) Anmeldenummer: 99934491.4
(22) Anmeldetag: 14.05.1999
(51) Int. Cl.: B01D 39/16, B01D 46/24

(54) **BESCHICHTETES FILTERELEMENT UND VERFAHREN ZUR HERSTELLUNG EINES BESCHICHTETEN FILTERELEMENTES**
COATED FILTER ELEMENT AND A METHOD FOR PRODUCING A COATED FILTER ELEMENT
ELEMENT FILTRANT REVETU ET SON PROCEDE DE FABRICATION

(30) Priorität: 16.05.1998 DE 19822089
(43) Veröffentlichungstag der Anmeldung: 18.04.2001
(73) Patentinhaber: Rausch, Walter, 90518 Altdorf (DE)
(72) Erfinder: Rausch, Walter, 90518 Altdorf (DE)
(74) Vertreter: Rauh, Helga
(86) Internationale Anmeldenummer: DE9901440
(87) Internationale Veröffentlichungsnummer: WO99059697

(56) Entgegenhaltungen:
- DE-A- 4 105 958
- DE-A- 4 208 195
- DE-A- 4 233 122
- GB-A- 820 860

## Beschreibung

Die Erfindung betrifft ein beschichtetes Filterelement mit den Merkmalen des Oberbegriffs des Anspruchs 1.

Ein beschichtetes Filterelement für das Abscheiden von Feinstpartikeln aus Gasen oder Flüssigkeiten, bestehend aus einem eigensteifen porösen Grundkörper aus einem gesinterten Thermoplast, und einer dem zu reinigendem Medium zugewandten feinporigeren, mit dem Grundkörper fest verbundenen Oberflächenschicht ist beispielsweise aus der EP-A-0 630 282 bekannt. Der Grundkörper besteht hier aus einem gemisch aus niedermolekularem und ultrahochmolekularem Polyethylen, während die Oberflächenschicht aus reinem ultrahochmolekularem Polyethylen besteht. Bei diesem Filterelement besteht die Schwierigkeit, daß die Korngröße und der Schmelzbereich des handelsüblichen Beschichtungsmaterials meistens nicht den Eigenschaften des Materials des Grundkörpers entspricht.

Aufgabe der vorliegenden Erfindung ist es daher, ein Filterelement zu schaffen, bei dem die Materialeigenschaften von Grundkörper und Oberflächenschicht besser aufeinander abgestimmt sind. Aufgabe der vorliegenden Erfindung ist es weiter, ein solches Filterelement dahingehend auszubilden, daß es preisgünstig herstellbar ist, eine möglichst große Filteroberfläche und einen möglichst geringen Druckverlust aufweist und daß es leicht zu verschiedenen Filtergrößen kombinierbar ist.

Die erste Teilaufgabe wird mit den im kennzeichnenden Teil des Anspruchs 1 genannten Merkmalen gelöst. Fortbildungen gemäß der zweiten Teilaufgabe sind im kennzeichnenden Teil von Ansprüchen 8 und 9 enthalten. Vorteilhafte Ausführungen der Erfindung sind jeweils in den weiteren abhängigen Ansprüchen umfaßt.

Erfindungsgemäß ist ein beschichtetes Filterelement für das Abscheiden von Feinstpartikeln aus Gasen oder Flüssigkeiten, bestehend aus einem eigensteifen porösen Grundkörper aus einem gesinterten Thermoplast, und einer dem zu reinigendem Medium zugewandten feinporigeren, mit dem Grundkörper fest verbundenen Oberflächenschicht, dadurch gekennzeichnet, daß die Oberflächenschicht aus einem thermoplastischen Copolymer besteht. Beispielsweise bestehen Copolymere des PE aus einem Gemisch von Ethylen mit weiteren Monomeren wie Acrylsäure oder Acrylsäureester,die sich während der Polymerisation miteinander verbinden. Entsprechend ihren stofflichen Komponenten und ihren Gemischanteilen lassen sich die physikalischen und chemischen Eigenschaften in gewünschter Weise beeinflussen, so kann beispielsweise der Schmelzpunkt zwischen 65 bis 105° C eingestellt werden. Copolymere von PE sind in verschiedenen Kornverteilungen auf dem Markt, deren Korngrößen beispielsweise zwischen 5 und 90µm liegen. Durch Abtrennen verschieden großer Kornbereiche lassen sich daraus Korngemische herstellen, die für die Oberflächenschicht mehr oder minder große mittlere Porenweiten ergeben, so daß eine Anpassung an das jeweils abzuscheidenden Material möglich ist. Das thermoplastische Copolymer wird auf den Grundkörper aufgesintert oder aufgeschweißt. Beispielsweise wird das Coplymer als Suspension mit einem Mischungsverhältnis Wasser:Copolymer von 8:1 bis 4:1, vorzugsweise 6:1 bis 5:1, auf den Grundkörper aufgebracht und anschließend aufgesintert. Der Grundkörper kann aus einem Gemisch aus ultrahochmolekularem (UHM)- und Hochdruck (HD)-Polyethylen (PE) oder aus einem Gemisch aus ultrahochmolekularem (UHM)-, Hochdruck (HD)- und Niederdruck (ND)-Polyethylen (PE) oder reinem ultrahochmolekularen (UHM)-Polyethylen bestehen, wobei auch Polypropylen (PP) oder ein mit Polypropylen versinterbares Copolymer Verwendung finden kann.

Die Herstellung eines erfindungsgemäßen Filterelements erfolgt vorzugsweise so daß auf einen gesinterten und erkalteten Grundkörper die Suspension aus Wasser mit Copolymer durch Aufstreichen, Aufspritzen, Eintauchen oder Eintauchen und Ansaugen aufgebracht wird und daß das Copolymer anschließend durch Heißluft oder infrarote Bestrahlung aufgesintert wird.

Ein erfindungsgemäß fortgebildetes Filterelement ist dadurch gekennzeichnet, daß der Grundkörper aus einem oder mehreren Rohren besteht, wobei das oder die Rohre an einem Ende ein Kopfstück aus einer thermoplastischen Gußmasse aufweist, bzw. aufweisen. Die Gußmasse muß nicht aus dem gleiche Material wie der Grundkörper bestehen und kann daher preiswerter gefertigt werden. Beispielsweise kann eine Zweikomponenten-Vergußmasse aus Polyurethan-Basis und Härter verwendet werden, wobei je nach Bedarf nach Viskosität und Topfzeit eingestellt werden können.

Ein erfindungsgemäßes beschichtetes Filterelement für das Abscheiden von Feinstpartikeln aus Gasen oder Flüssigkeiten besteht aus einem eigensteifen porösen Grundkörper aus einem gesinterten Thermoplast, und einer dem zu reinigendem Medium zugewandten feinporigeren, mit dem Grundkörper fest verbundenen Oberflächenschicht, wobei der Grundkörper aus einem Gemisch aus ultrahochmolekularem (UHM)- und Hochdruck (HD)-Polyethylen (PE) oder aus einem Gemisch aus ultrahochmolekularem (UHM)-, Hochdruck (HD)- und Niederdruck (ND)-Polyethylen (PE) oder reinem ultrahochmolekularem (UHM)-Polyethylen (PE) besteht, und wobei die Oberflächenschicht aus einem UHM-PE besteht, und ist dadurch gekennzeichnet, daß der Grundkörper aus einem oder mehreren Rohren besteht, wobei das oder die Rohre an einem Ende ein Kopfstück aus einer thermoplastischen Gußmasse aufweist, bzw. aufweisen.

Das Kopfstück ist vorzugsweise als Düse für das oder die Rohre ausgebildet, wobei bei mehreren Rohren in das Kopfstück ein Lochblech zur Verstärkung eingelassen, eingegossen oder aufgebracht ist. Vorzugsweise sind die Rohre durch eine Fußleiste miteinander verbunden und durch diese verschlossen und weisen im wesentlichen gleiche Länge und im wesentlichen den gleichen Durchmesser auf.

Nach einer Ausführung der Erfindung liegen mehrere Rohre im wesentlichen parallel zueinander in der gleichen Ebene und bilden so ein flaches, rechteckiges Filterelement, das in Höhe und Breite sehr leicht verändert werden kann, wenn die Rohre auf die gewünschte Länge geschnitten und deren Zahl entsprechend ausgelegt wird.

Nach einer anderen Ausführung der Erfindung sind mehrere Rohre parallel zueinander angeordnet und bilden im Querschnitt zusammen ein regelmäßiges geometrisches Gebilde wie einen Kreis, ein Oval, ein Rechteck oder dergleichen. Mit einer solchen Anordnung kann die Form eines Schlauchfilters nachgebildet werden und dieser durch einen Filter mit erfindungsgemäßen Filterelementen ersetzt werden.

Die Fußleiste kann aus einem angegossenen thermoplastischen Material oder aus einem dichtend mit den Rohren zu verbindenden Versteifungsprofil bestehen.

Nach einer vorteilhaften Ausführung der Erfindung sind das oder die Rohre mit einer wellenförmigen Profilierung versehen. Dadurch ergibt sich eine Vergrößerung der Oberfläche, durch die der Gesamtdruckverlust verringert werden kann.

Im folgenden wird die Erfindung anhand von Zeichnungen beispielhaft näher beschrieben. Dabei zeigen:
Fig. 1 eine erste Ausführung eines Filterelements in perspektivischer Darstellung;
Fig. 2 eine zweite Ausführung eines Filterelements im Schnitt.

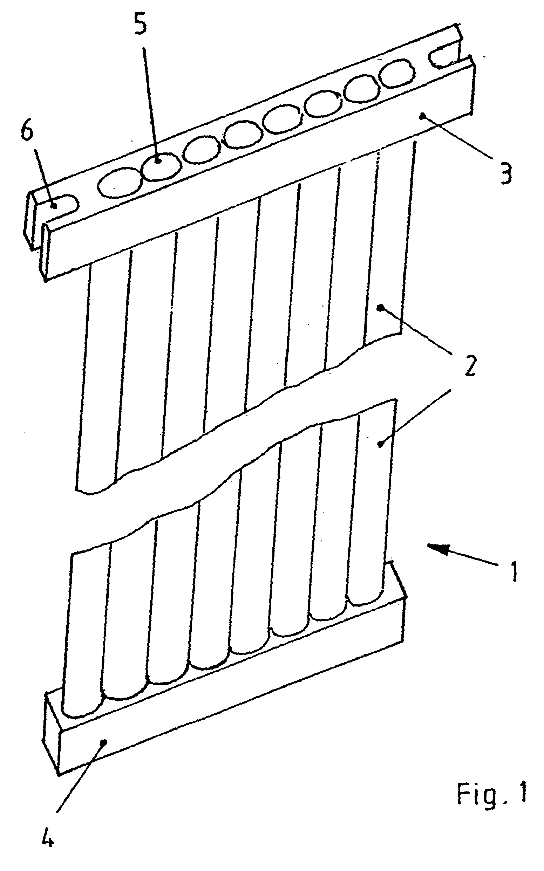

Das Filterelement 1 gemäß Fig. 1 besteht aus mehreren parallel in einer Ebene angeordneten Rohren 2, die wie oben ausgeführt aus einem gesinterten Grundkörper mit einer Oberflächenschicht aufgebaut sind. Oben ist ein Kopfstück 3 angegossen, das leistenartig ausgebildet ist und Öffnungen 5 zum Inneren der Rohre 2 hin aufweist. An den Seiten sind Aussparungen für die Montage in ein Filtergehäuse vorhanden. Unten sind die Rohre 2 durch eine Fußleiste 4, die ebenfalls angegossen ist, verschlossen. Das Filterelement saugt ein mit Partikeln verschmutztes Medium an, wobei sich die Partikel auf der Oberflächenschicht ablagern und das reine Medium in die Rohre 2 und durch die Öffnungen 5 strömt. Erreicht der Druckverlust durch die Ablagerungen auf den Rohren 2 einen bestimmten Wert, erfolgt eine Reinigung der Oberflächenschicht im Gegenstromverfahren, indem kurz reines Medium durch die Öffnungen 5 gepreßt wird, das die Poren in der Oberflächenschicht der Rohre säubert.

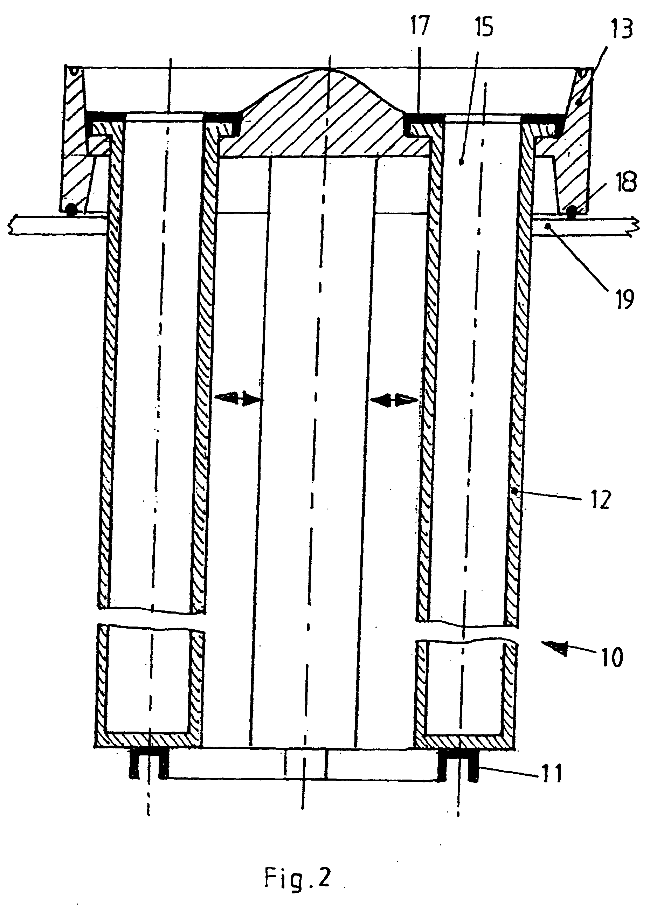

Die Ausführung gemäß Fig. 2 besteht ebenfalls aus oben beschriebenen Rohren 12, die jedoch kreisförmig angeordnet sind, wobei hier ein Längsschnitt durch ein Filterelement mit vier Rohren 12 dargestellt ist, Die Rohre 12 sind mit Flanschen in einem oberen runden und scheibenförmigen Kopfstück 13 eingesetzt, das zu dem Inneren 15 der Rohre geöffnet ist. Zur Verstärkung ist ein Lochblech 17 auf den oberen Rohrenden aufgebracht, dessen Löcher den gleich Durchmesser aufweisen, wie der Innendurchmesser der Rohre 12. Unten sind die Rohre durch ein kreisförmiges Versteifungsprofil 11 miteinander verbunden. Das Filterelement 10 ist in eine Öffnung eines Gehäuses 19 eingesetzt, wobei es mit seinem Kopfstück 13 flanschartig die Öffnung übergreift und wobei zwischen dem Gehäuse 19 und dem Kopfstücke 13 ein Dichtungsring 18 angeordnet ist.

## Patentansprüche

1. Beschichtetes Filterelement für das Abscheiden von Feinstpartikeln aus Gasen oder Flüssigkeiten, bestehend aus einem eigensteifen porösen Grundkörper aus einem gesinterten Thermoplast, und einer dem zu reinigendem Medium zugewandten feinporigeren, mit dem Grundkörper fest verbundenen Oberflächenschicht,
**dadurch gekennzeichnet,**
**daß** die Oberflächenschicht aus einem thermoplastischen Copolymer besteht.

2. Beschichtetes Filterelement nach Anspruch 1,
**dadurch gekennzeichnet,**
**daß** das thermoplastische Copolymer auf den Grundkörper aufgesintert oder aufgeschweißt ist.

3. Beschichtetes Filterelement nach einem der vorhergehenden Ansprüche,
**dadurch gekennzeichnet,**
**daß** das Copolymer ein Copolymer eines thermoplastischen Polymers des Grundkörpers ist.

4. Beschichtetes Filterelement nach Anspruch 3,
**dadurch gekennzeichnet,**
**daß** der Grundkörper aus einem Gemisch aus ultrahochmolekularem (UHM) - und Hochdruck (HD) - Polyethylen (PE) oder aus einem Gemisch aus ultrahochmolekularem (UHM)-, Hochdruck (HD)- und Niederdruck (ND)-Polyethylen (PE) oder reinem ultrahochmolekularen (UHM)-Polyethylen besteht.

5. Beschichtetes Filterelement nach Anspruch 3,
**dadurch gekennzeichnet,**
**daß** der Grundkörper aus einem Polypropylen (PP) oder einem mit Polypropylen versinterbaren Copolymer besteht.

6. Beschichtetes Filterelement nach einem der vorhergehenden Ansprüche,
**dadurch gekennzeichnet,**
**daß** der Grundkörper aus einem oder mehreren Rohren (2, 12) besteht,
wobei das oder die Rohre (2, 12) an einem Ende ein Kopfstück (3, 13) aus einer thermoplastischen Gußmasse aufweist, bzw. aufweisen.

7. Beschichtetes Filterelement nach Anspruch 6,
**dadurch gekennzeichnet,**
**daß** das Kopfstück (3, 13) als Düse (5, 15) für das oder die Rohre ausgebildet ist.

8. Beschichtetes Filterelement nach Anspruch 7,
**dadurch gekennzeichnet,**
**daß** bei mehreren Rohren in das Kopfstück ein Lochblech (17) zur Verstärkung eingelassen, eingegossen oder aufgebracht ist.

9. Beschichtetes Filterelement nach Anspruch 7 oder 8,
**dadurch gekennzeichnet,**
**daß** die Rohre durch eine Fußleiste (4) miteinander verbunden und durch diese verschlossen sind.

10. Beschichtetes Filterelement nach einem der Ansprüche 6 bis 9,
**dadurch gekennzeichnet,**
**daß** die Rohre im wesentlichen gleiche Länge aufweisen.

11. Beschichtetes Filterelement nach einem der Ansprüche 6 bis 10,
**dadurch gekennzeichnet,**
**daß** die Rohre im wesentlichen den gleichen Durchmesser aufweisen.

12. Beschichtetes Filterelement nach einem der Ansprüche 6 bis 11,
**dadurch gekennzeichnet,**
**daß** mehrere Rohre (2) im wesentlichen parallel zueinander in der gleichen Ebene liegen.

13. Beschichtetes Filterelement nach einem der Ansprüche 6 bis 12,
**dadurch gekennzeichnet,**
**daß** mehrere Rohre (12) parallel zueinander angeordnet sind und im Querschnitt zusammen ein regelmäßiges geometrisches Gebilde wie einen Kreis, ein Oval, ein Rechteck oder dergleichen bilden.

14. Beschichtetes Filterelement nach Anspruch 9,
**dadurch gekennzeichnet,**
**daß** die Fußleiste aus einem angegossenen thermoplastischen Material besteht.

15. Beschichtetes Filterelement nach Anspruch 9,
**dadurch gekennzeichnet,**
**daß** die Fußleiste aus einem dichtend mit den Rohren zu verbindenden Versteifungsprofil besteht.

16. Beschichtetes Filterelement nach einem der Ansprüche 6 bis 15,
**dadurch gekennzeichnet,**
**daß** das oder die Rohre profiliert ausgeführt sind.

17. Beschichtetes Filterelement nach Anspruch 16,
**dadurch gekennzeichnet,**
**daß** das Profil eine regelmäßige Wellenform ist.

18. Verfahren zur Herstellung eines beschichteten Filterelement nach einem der vorhergehenden Ansprüche,
**dadurch gekennzeichnet,**
**daß** das Copolymer als Suspension mit einem Mischungsverhältnis Wasser:Copolymer von 8:1 bis 4:1, vorzugsweise 6:1 bis 5:1, auf den Grundkörper aufgebracht und anschließend aufgesintert ist.

19. Verfahren gemäß Anspruch 18,
**dadurch gekennzeichnet,**
**daß** auf einen gesinterten und erkalteten Grundkörper die Suspension aus Wasser mit Copolymer durch Aufstreichen, Aufspritzen, Eintauchen oder Eintauchen und Ansaugen aufgebracht wird,
und **daß** das Copolymer anschließend durch Heißluft oder infrarote Bestrahlung aufgesintert wird.

## Claims

1. A coated filter element for separating microscopic particles from gases or fluids, consisting of an inherently rigid, porous base body made of a sintered thermoplastics material, and a fine-pored surface layer directed towards the medium to be cleaned and strongly bonded to the base body,
**characterised in that** the surface layer consists of a thermoplastic copolymer.

2. A coated filter element according to Claim 1,
**characterised in that** the thermoplastic copolymer is sintered or welded onto the base body.

3. A coated filter element according to any one of the preceding Claims,
**characterised in that** the copolymer is a copolymer of a thermoplastic polymer of the base body.

4. A coated filter element according to Claim 3,
**characterised in that** the base body consists of a mixture of ultrahigh molecular (UHM) and high pressure (HP) polyethylene (PE), or a mixture of ultrahigh molecular (UHM), high pressure (HP) and low pressure (LP) polyethylene (PE), or pure ultrahigh molecular (UHM) polyethylene.

5. A coated filter element according to Claim 3,
**characterised in that** the base body consists of a polypropylene (PP) or a copolymer sinterable with polypropylene.

6. A coated filter element according to any one of the preceding Claims,
**characterised in that** the base body consists of one or more tubes (2, 12), the tube or tubes (2, 12) having at one end a headpiece (3, 13) made of a thermoplastic casting compound.

7. A coated filter element according to Claim 6,
**characterised in that** the headpiece (3, 13) is a nozzle (5, 15) for the tube or tubes.

8. A coated filter element according to Claim 7,
**characterised in that**, in the case of several tubes, a perforated plate (17) is recessed in, cast integrally with or fitted onto the headpiece for the purpose of reinforcement.

9. A coated filter element according to Claim 7 or 8,
**characterised in that** the tubes are joined together by means of a base strip (4) and are closed by said base strip.

10. A coated filter element according to any one of Claims 6 to 9,
**characterised in that** the tubes have substantially the same length.

11. A coated filter element according to any one of Claims 6 to 10,
**characterised in that** the tubes have substantially the same diameter.

12. A coated filter element according to any one of Claims 6 to 11,
**characterised in that** several tubes (2) lie substantially parallel to one another in the same plane.

13. A coated filter element according to any one of Claims 6 to 12,
**characterised in that** several tubes (12) are arranged parallel to one another and in cross-section together form a regular geometric structure such as a circle, an oval, a rectangle or the like.

14. A coated filter element according to Claim 9,
**characterised in that** the base strip consists of an integrally cast thermoplastic material.

15. A coated filter element according to Claim 9,
**characterised in that** the base strip consists of a reinforcing profile to be joined to the tubes so as to form a seal.

16. A coated filter element according to any one of Claims 6 to 15,
**characterised in that** the tube or tubes are profiled.

17. A coated filter element according to Claim 16,
**characterised in that** the profile is a regular wave-shape.

18. A method for producing a coated filter element according to any one of the preceding Claims,
**characterised in that** the copolymer is applied to the base body as a suspension with a mixing ratio of water : copolymer of 8 : 1 to 4 : 1, preferably 6 : 1 to 5 : 1, and is then sintered thereon.

19. A method according to Claim 18,
**characterised in that** the suspension of water with copolymer is applied to a sintered and cooled base body by brushing on, spraying on, immersion therein or immersion and application thereto by suction,
and **in that** the copolymer is then sintered thereon by means of hot air or infrared radiation.

## Revendications

1. Elément filtrant revêtu pour la séparation de particules très fines dans des gaz ou des liquides, se composant d'un corps de base poreux à rigidité propre en un thermoplastique fritté, et d'une couche de surface fermement assemblée au corps de base, avec des pores de petites dimensions, tournée vers le fluide à épurer, **caractérisé en ce que** la couche de surface se compose d'un copolymère thermoplastique.

2. Elément de filtre revêtu suivant la revendication 1, **caractérisé en ce que** le copolymère thermoplastique est fritté ou soudé sur le corps de base.

3. Elément de filtre revêtu suivant l'une des revendications précédentes, **caractérisé en ce que** le copolymère est un copolymère d'un polymère thermoplastique du corps de base.

4. Elément de filtre revêtu suivant la revendication 3, **caractérisé en ce que** le corps de base se compose d'un mélange de polyéthylène (PE) à ultra haut poids moléculaire (UHM) et à haute pression (HP) ou d'un mélange de polyéthylène (PE) à ultra haut poids moléculaire (UHM), à haute pression (HP) et à basse pression (BP), ou de polyéthylène (PE) à ultra haut poids moléculaire (UHM) pur.

5. Elément de filtre revêtu suivant la revendication 3, **caractérisé en ce que** le corps de base se compose d'un polypropylène (PP) ou d'un copolymère pouvant être fritté avec le polypropylène.

6. Elément de filtre revêtu suivant l'une des revendications précédentes, **caractérisé en ce que** le corps de base se compose d'un ou de plusieurs tubes (2, 12), dans lequel le ou les tube(s) (2, 12) présente(nt) à une extrémité une pièce de tête (3, 13) en une matière thermoplastique moulée.

7. Elément de filtre revêtu suivant la revendication 6, **caractérisé en ce que** la pièce de tête (3, 13) se présente sous la forme d'une buse (5, 15) pour le ou les tube(s).

8. Elément de filtre revêtu suivant la revendication 7, **caractérisé en ce que**, dans le cas de plusieurs tubes, une tôle perforée de renforcement (17) est insérée, moulée ou posée dans la pièce de tête.

9. Elément de filtre revêtu suivant la revendication 7 ou 8, **caractérisé en ce que** les tubes sont assemblés les uns aux autres par une barrette de pied (4) et fermés par celle-ci.

10. Elément de filtre revêtu suivant l'une des revendications 6 à 9, **caractérisé en ce que** les tubes présentent sensiblement la même longueur.

11. Elément de filtre revêtu suivant l'une des revendications 6 à 10, **caractérisé en ce que** les tubes présentent sensiblement le même diamètre.

12. Elément de filtre revêtu suivant l'une des revendications 6 à 11, **caractérisé en ce que** plusieurs tubes (2) sont placés sensiblement parallèlement l'un à l'autre dans le même plan.

13. Elément de filtre revêtu suivant l'une des revendications 6 à 12, **caractérisé en ce que** plusieurs tubes (12) sont disposés sensiblement parallèlement les uns aux autres et forment ensemble, en section transversale, une figure géométrique régulière, comme un cercle, un ovale, un rectangle ou analogue.

14. Elément de filtre revêtu suivant la revendication 9, **caractérisé en ce que** la barrette de pied se compose d'une matière thermoplastique surmoulée.

15. Elément de filtre revêtu suivant la revendication 9, **caractérisé en ce que** la barrette de pied se compose d'un profilé de renforcement à assembler de façon étanche aux tubes.

16. Elément de filtre revêtu suivant l'une des revendications 6 à 15, **caractérisé en ce que** le ou les tubes a/ont une forme profilée.

17. Elément de filtre revêtu suivant la revendication 16, **caractérisé en ce que** le profil est une forme ondulée régulière.

18. Procédé pour la fabrication d'un élément de filtre revêtu suivant l'une des revendications précédentes, **caractérisé en ce que** l'on dépose le copolymère sur le corps de base sous la forme d'une suspension avec des proportions de mélange eau:copolymère de 8:1 à 4:1, de préférence de 6:1 à 5:1, et ensuite on le fritte sur celui-ci.

19. Procédé suivant la revendication 18, **caractérisé en ce que** l'on dépose la suspension composée d'eau et de copolymère sur un corps de base fritté et refroidi par enduction, projection, immersion ou immersion et aspiration, et **en ce que** l'on fritte ensuite le copolymère à l'air chaud ou par un rayonnement infrarouge.
